# EUROPÄISCHE PATENTSCHRIFT

(11) **EP 2 653 274 B1**
(45) Veröffentlichungstag und Bekanntmachung des Hinweises auf die Patenterteilung: **28.10.2015**
(21) Anmeldenummer: 13162747.3
(22) Anmeldetag: 08.04.2013
(51) Int. Cl.: B25J 15/06, B65G 47/91

(54) **Unterdruck-Greifvorrichtung**
Negative - pressure gripping device
Dispositif de préhension à pression négative

(30) Priorität: 19.04.2012 DE 102012206469
(43) Veröffentlichungstag der Anmeldung: 23.10.2013
(73) Patentinhaber: Krones Aktiengesellschaft, 93073 Neutraubling (DE)
(72) Erfinder: Eder, Christoph, 93073 Neutraubling (DE); Kirschner, Peter, 93073 Neutraubling (DE)
(74) Vertreter: Benninger, Johannes

(56) Entgegenhaltungen:
- EP-A2- 2 361 860
- DE-C1- 19 817 217
- FR-A1- 2 709 478
- US-A- 4 703 966
- US-A- 4 787 662

## Beschreibung

Die vorliegende Erfindung betrifft eine Unterdruck-Greifvorrichtung mit den Merkmalen des Oberbegriffes des Anspruches 1.

Es sind zahlreiche Arten der verschiedensten Greifvorrichtungen bekannt. Eine Gruppe von Greifvorrichtungen nutzt Unterdruck zur Aufnahme von Objekten. Solche Unterdruck-Greifvorrichtungen werden oftmals auch als Vakuum-Greifer bezeichnet. Mit solchen Greifern lassen sich glattflächige Objekte besonders schonend aufnehmen, tragen und sanft wieder absetzen. Bekannte Ausführungsvarianten dieser Unterdruck-Greifvorrichtungen weisen Ventilgehäuse mit darin verlaufenden Luftkanälen, wenigstens eine Unterdruckkammer und einen darin angeordneten Ventilkörper zum Verschließen oder Freigeben eines Luftkanals beim Ansaugen oder Absetzen des zu greifenden Objekts auf. Solche Ventilvarianten finden sich bspw. in der EP 0 456 884 A2.

Die DE 697 24 012T2 offenbart weiterhin eine plattenförmige Unterdruck-Greifvorrichtung mit einer Vakuumkammer, die mit einer Anlage zur Unterdruckerzeugung verbunden ist. Die Vakuumplatte weist eine ebene untere Platte mit mehreren Öffnungen auf, deren Unterseite mit einem elastischen, luftdichten Boden versehen ist. Innerhalb der Vakuumkammer befindet sich eine in vertikaler Richtung bewegliche Kugel, die in der Lage ist, die in der Platte befindliche Öffnung zu verschließen. Ein nicht von der Kugel erfasster Bypasskanal soll für eine permanente Aufrechterhaltung des Unterdrucks sorgen, um einen Artikel anheben zu können, auch wenn die Kugel den Ansaugkanal in der Vakuumkammer verschließt. Sobald ein anzuhebendes Objekt erfasst wird, fällt die Kugel aufgrund der sich in der Vakuumkammer ändernden Druckverhältnisse nach unten.

Eine gattungsgemäße Unterdruck-Greifvorrichtung mit einer Kontaktfläche zur Aufnahme von Objekten, die mehrere Ansaugöffnungen aufweist, die jeweils mit einem Luftkanal und einem darin befindlichen Ventil in Verbindungen steht, ist schließlich aus der EP 2 361 860 A2 bekannt. Dort weist jedes der Ventile einen innerhalb der Unterdruckkammer beweglich angeordneten Ventilkörper mit einer Strömungsblende auf. Im Wesentlichen handelt es sich dabei um eine plattenförmige Greiferanordnung, in der mehrerer solcher Ventile angeordnet sind, die jeweils bewegliche Ventilplättchen aufweist, mit denen die Greiferfunktion realisiert wird.

US 4703966 A offenbart eine Unterdruck. Greifvorrichtung , bei der ein lösbar befestigter Ventileinsatz mit Ventilen vorgesehen ist, wobei die Ventile in der geschlossenen Oberseite des Ventileinsatzes 4 angeordnet sind.

Ein Ziel der vorliegenden Erfindung besteht darin, eine einfach aufgebaute und kostengünstig zu fertigende, zu montierende und zu wartenden Unterdruck-Greifvorrichtung zur Verfügung zu stellen, die einerseits ein schnelles Ansaugen von aufzunehmenden Artikeln und Objekten und andererseits deren zuverlässige Fixierung an der Greifvorrichtung ermöglicht.

Zur Erreichung dieser Ziele schlägt die vorliegende Erfindung eine Unterdruck-Greifvorrichtung mit den Merkmalen des unabhängigen Anspruchs 1 vor, die eine ebene Kontaktfläche einer unteren Saugplatte zur Aufnahme von Objekten und Artikeln-aufweist, die durch Aufsetzen der Greifvorrichtung von oben unter gleichzeitiger Aufbringung eines Unterdruck zwischen der Saugplatte und der Oberseite des aufzunehmenden Objektes das Objekt fixieren und damit aufnehmen kann. Die Saugplatte weist wenigstens eine Ansaugöffnung auf, die mit einem Luftkanal und einem diesem Luftkanal zugeordneten Ventil in Verbindung steht, das einen innerhalb einer im Luftkanal befindlichen Unterdruckkammer beweglich angeordneten Ventilkörper mit einer Strömungsblende aufweist. Der Ventilkörper ist zwischen zwei Endlagen weitgehend frei innerhalb der Unterdruckkammer beweglich, so dass er die Öffnungen des Luftkanals je nach Bedarf freigeben oder mit Hilfe der Strömungsblende weitgehend verschließen kann, um damit die Greifvorrichtung sensibel ansprechen zu lassen, sobald die Kontaktfläche auf eine Oberseite eines Objekts aufgesetzt wird, um dieses mit ausreichender Haltekraft aufnehmen zu können.

Bei der vorliegenden Erfindung handelt es sich im Wesentlichen um modular aufgebaute Ventilbaugruppen, bei denen jedes Ventil eine Hülse zur Aufnahme eines Ventilkörpers bzw. eines Ventilplättchens umfasst. Zusammengesetzt und bspw. in der Platte montiert, entsteht dabei ein Ventil, das für die Strömungsbegrenzung eingesetzt wird. Durch das Anschlagen des Ventilkörpers oder Ventilplättchens am Halteplättchen, an dem vorzugsweise eine Dichtung angebracht ist, wird die Strömungsbegrenzung hergestellt. Die Hülse kann in eine Bohrung eingesetzt und von dort wieder entnommen werden, bspw. zu Wartungszwecken. An der Hülse angeformte Widerhaken oder Rasthaken können eine lösbare Rastverbindung schaffen und die Hülse am Herausfallen aus ihrer Montagebohrung hindern. Die erfindungsgemäße modular aufgebaute Ventilbaugruppe, die im Wesentlichen eine mit der unteren Saugplatte, einer Trägerplatte o. dgl. verrastbare Ventilhülse mit darin beweglichem Ventilkörper umfasst, erfordert eine entsprechende Aufnahmeöffnung in der ebenen oder plattenförmigen Kontaktfläche der unteren Saugplatte bzw. in der Trägerplatte, in der die Ventilhülse lösbar eingesetzt werden kann, insbesondere durch eine Rastverbindung. Zu diesem Zweck ist es vorteilhaft, wenn das Ventilgehäuse eine zylindrische Kontur bzw. eine hülsenartige Kontur aufweist. Erfindungsgemäß ist vorgesehen, dass die wenigstens eine Ansaugöffnung als Aufnahmeöffnung ausgebildet ist und dass das hülsenförmige Ventilgehäuse mittels einer Rastverbindung in der Aufnahmeöffnung fixierbar ist.

Zudem muss das Ventilgehäuse so geformt sein, dass es eine Aufnahme für den plattenförmigen Ventilkörper bildet. Eine weitere vorteilhafte Ausführungsvariante kann vorsehen, dass die Ventilhülse einen Absatz zur Fixierung eines Filters an seiner Stirnfläche aufweist. Dieser Filter kann bspw. durch eine Filterscheibe o. dgl. gebildet sein, die frontseitig an der Kontaktfläche der unteren Saugplatte zu dem aufzunehmenden Objekt angeordnet ist. Der Filter dient in erster Linie dazu, das ungewollte Ansaugen von Fremdkörpern und Partikeln zu verhindern.

Die Ventilhülse der Greifvorrichtung kann insbesondere eine konisch zulaufende Innenmantelfläche zur Fixierung des Ventilkörpers aufweisen, so dass der im Ventilgehäuse beweglich angeordnete Ventilkörper oder das Ventilplättchen am Herausfallen gehindert wird, sobald die Ventilhülse in der Kontaktfläche der unteren Saugplatte montiert ist. In diesem Fall kann der Bohrungsdurchmesser der Hülse kleiner sein als der Durchmesser des Ventilplättchens, was durch eine leichte Verformung der Mantelseiten der Ventilhülse nach dem Einsetzen in die korrespondierende Aufnahme der Kontaktfläche der unteren Saugplatte erreicht werden kann. Vorzugsweise jedoch weist das Ventilgehäuse einen in der Aufnahme fixierbaren, insbesondere verrastbaren und gegen eine Haltekraft lösbaren oberen Deckel auf, der eine obere Begrenzung für die vertikale Beweglichkeit des Ventilkörpers oder Ventilplättchens bildet, so dass dieses zwischen dem lösbaren Deckel und der unteren Kontaktfläche der Saugplatte beweglich angeordnet ist. Die gute Montierbarkeit der einzelnen Bauteile kann bspw. dadurch gewährleistet werden, dass das Ventilgehäuse eine konisch zulaufende Innenmantelfläche zur Fixierung des lösbaren und/oder verrastbaren Deckels aufweist. So kann bei einer Variante der erfindungsgemäßen Greifvorrichtung deren durch mehrere Einschnitte unterbrochene zylindrische Mantelfläche wenigstens drei Rasthaken bilden, die nach außen weisende Rastnasen zur Verrastung in der Kontaktfläche oder Saugplatte aufweisen. Diese Rasthaken können ggf. eine Doppelfunktion aufweisen, indem geeignete Widerhaken oder Rasthaken an der Hülse dazu dienen können, die gewünschte lösbare Rastverbindung herzustellen und das Ventilgehäuse am Herausfallen aus der Kontaktfläche der unteren Saugplatte oder Trägerplatte zu hindern. Die Verrastung erfolgt hierbei durch elastische Verformung der Wandabschnitte der Ventilhülse, die ggf. in Längsrichtung geschlitzt sein oder über geeignete Aussparungen verfügen können, um die Verrastung oder auch das Lösen der Rastverbindung zu erleichtern.

Darüber hinaus können die Rasthaken der Mantelfläche des Ventilgehäuses jeweils weitere Rastnasen aufweisen, die zur Innenmantelfläche weisen und den Deckel im verrasteten Zustand fixieren. Die Montierbarkeit des Deckels ist typischerweise nur bei demontiertem, noch nicht in der unteren Saugplatte oder Trägerplatte verrasteten Zustand des Ventilgehäuses gegeben, da die Wandabschnitte zum Einsetzen des Ventilkörpers und insbesondere zum Verrasten des Deckels nach außen ausweichen müssen, damit dieser über die nach innen weisenden weiteren Rastnasen in seine Endlage geschoben werden kann. Sobald der Deckel montiert ist und den Ventilkörper bzw. das Ventilplättchen in seiner vorgesehenen Lage hält, können die als Rasthaken ausgebildeten Wandabschnitte elastisch nach innen ausweichen, so dass die äußeren Rastnasen über die Aufnahmeöffnung in der unteren Saugplatte oder Trägerplatte geschoben und dort verrastet werden können.

Das Gehäuse des modular aufgebauten Ventils, das im Wesentlichen durch die Ventilhülse gebildet ist, kann insbesondere aus einem zumindest geringfügig elastisch verformbaren Kunststoff gefertigt sein, bspw. aus einem Spritzgussbauteil. Das Gehäuse kann jedoch auch aus einem geeigneten Metall wie bspw. einer Aluminiumlegierung oder aus einem geeigneten Druckgussmaterial gebildet sein.

Die erfindungsgemäße Unterdruck-Greifvorrichtung ermöglicht die schnelle Erfassung und Aufnahme von zu greifenden Objekten. Diese können sehr zuverlässig fixiert werden, was sich insbesondere daraus ergibt, dass nicht belegte Ansaugöffnungen weitgehend verschlossen werden und somit das Gesamtvakuum bzw. der gesamte aufgebaute Unterdruck nicht zu stark abfällt oder sogar zusammenbricht. Der Ventilkörper liegt in einer ersten Endlage an einer oberen Öffnung des in die Unterdruckkammer mündenden Luftkanals an und verschließt diese bis auf die durch die durchlässige Strömungsblende vorgegebene Luftansaugung weitgehend. In seiner ersten Endlage ist der Ventilkörper durch den im Luftkanal herrschenden Unterdruck an die obere Öffnung des Luftkanals angesaugt. In seiner zweiten Endlage liegt der Ventilkörper an einer Innenseite der Kontaktfläche der unteren Saugplatte mit der darin befindlichen wenigstens einen Ansaugöffnung unter weitgehender Freihaltung des Öffnungsquerschnitts der wenigstens einen Ansaugöffnung auf. Der Ventilkörper kann insbesondere durch eine flache Ventilplatte mit wenigstens einer darin befindlichen Bohrung als Strömungsblende gebildet sein. Bei dieser Variante ist der Ventilkörper als flache Scheibe ausgebildet, die sich innerhalb der Unterdruckkammer zwischen den beiden Endlagen auf und ab bewegen kann, um das in der Greifvorrichtung befindliche Ventil je nach Bedarf steuern zu können.

Die vorliegende Erfindung vermeidet die Nachteile der bekannten Greifvorrichtungen, nämlich die aufwändige Montage der einzelnen Ventilbaugruppen und deren schlechte Zugänglichkeit zu Wartungszwecken. Die Hülse des erfindungsgemäßen Ventils ist ein Bestandteil der Ventilbaugruppe. Sie weist bspw. eine zylindrische Form auf und ermöglicht das Einlegen des Ventilplättchens sowie das Anbringen eines Halteplättchen, an dem eine Dichtung befestigt ist. Auf der Stirnfläche der Hülse kann sich ein Absatz befinden, in der ein Filter eingelegt werden kann. Um ein Herausfallen des Ventilplättchens zu verhindern, ist die Bohrung in Richtung Absatz konisch zulaufend. Der Aufbau der Ventilbaugruppe kann insbesondere dem in der EP 2361860 A2 gezeigten Ventil ähneln oder entsprechen. Das Ventilplättchen des erfindungsgemäßen Moduls kann nicht in die Hülse fallen, da der Bohrungsdurchmesser der Hülse kleiner als der Durchmesser des Ventilplättchen ist. Eine Hinterdrehung ermöglicht durch geschicktes Handling das Einlegen des Ventilplättchens.

Die Hülse besitzt neben der Bohrung für das Ventilplättchen und den Absatz für das Filterelement, Widerhaken. Die Widerhaken verhindern ein Rausfallen der eingebauten Ventilbaugruppe. Zur Montageerleichterung sind drei Nuten längsseitig angebracht. Die Aussparungen ermöglichen ein elastisches Verformen der Stege an der Hülse. Dadurch ist die Montage (Eindrücken des Ventils) und Demontage (Aushebeln mit einem Schlitzschraubendreher) der Ventilbaugruppe mit geringem Kraftaufwand möglich.

Das modulartige Ventil weist mehrere Vorteile und Verbesserungen gegenüber dem Stand der Technik auf, so bspw. eine verbesserte Wartbarkeit der Ventilbaugruppe. Durch das "ein- und ausklicken" der Ventile kann jedes Ventil einzeln aus seiner Bohrung gehebelt werden. Eine Demontage einer Platte, die für das Halten der Ventilplättchen verantwortlich ist, ist nicht nötig. Auch ist die Ventilbaugruppe durch ihren Aufbau einfacher montierbar. Zudem kann die Fertigung der Ventilbaugruppe auf Lager erfolgen. Vorgefertigte Ventile ermöglichen ein kostengünstiges Ventil.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in drei Schnittansichten die verschiedenen Zustände eines Ventils gemäß dem bekannten Stand der Technik bei der Annäherung an ein Objekt und bei dessen Kontaktierung.
Fig. 2 zeigt in drei Ansichten den Aufbau eines Ventilgehäuses und seine Montierbarkeit in einer Saugplatte einer Greifvorrichtung.
Fig. 3 zeigt in drei Ansichten die Gestaltung von Einzelkomponenten des Ventilgehäuses gemäß Fig. 2.
Fig. 4 zeigt in insgesamt fünf verschiedenen Ansichten die miteinander verbindbaren Einzelkomponenten des Unterdruckventils.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

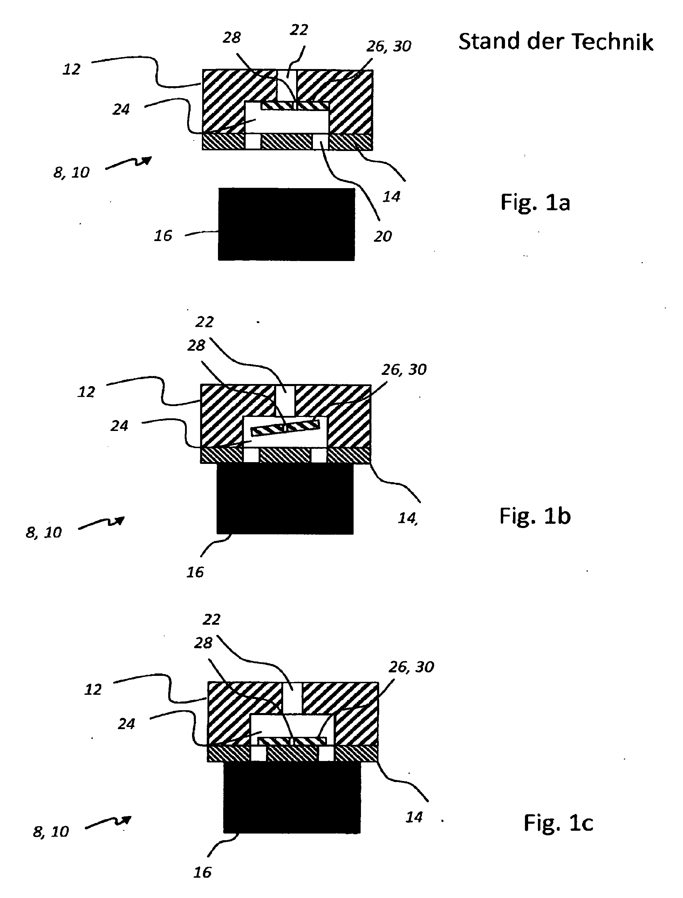

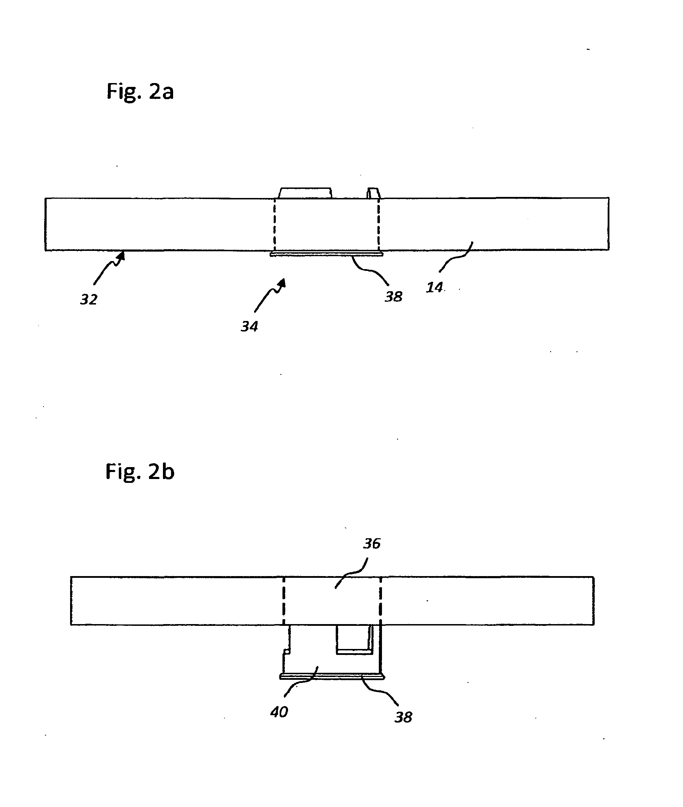

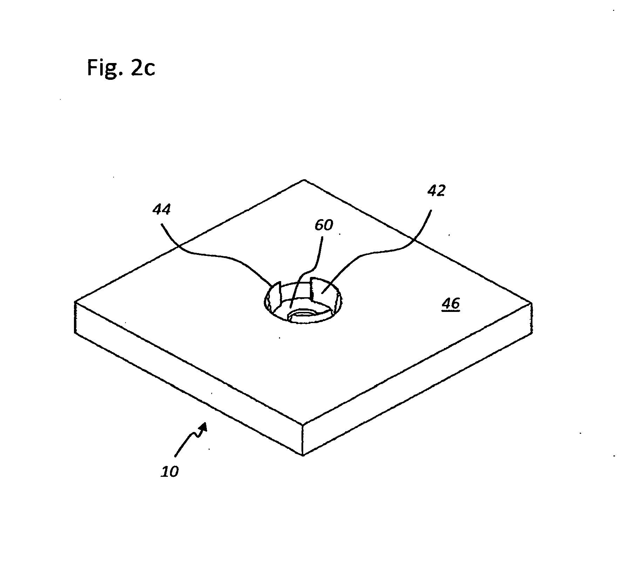

Anhand der schematischen Schnittdarstellungen der Figuren 1a, 1b und 1c wird die grundsätzliche Funktionsweise eines Unterdruckventils 10 gemäß dem bekannten Stand der Technik erläutert, das den wesentlichen Teil einer hier nicht in ihrem gesamten Umfang dargestellten Unterdruck-Greifvorrichtung 8 bildet. Das Ventil 10 bzw. die Greifvorrichtung 8 weisen ein Ventilgehäuse 12 und eine daran angeordnete untere Saugplatte 14 zur Aufnahme von Objekten 16 auf. Die Saugplatte 14 kann eine größere Ausdehnung aufweisen (vgl. Fig. 2) und vorzugsweise mehrere solcher Ventile 10 aufweisen, die in regelmäßiger Anordnung und beabstandet voneinander dort montiert sind. Die Saugplatte 14 weist im gezeigten Ausführungsbeispiel eine oder mehrere Ansaugöffnungen 20 auf, die mit einem im Ventilgehäuse 12 angeordneten Luftkanal 22 in Verbindung stehen. Zwischen der Saugplatte 14 und dem Luftkanal 22 befindet sich eine Unterdruckkammer 24, innerhalb der ein beweglich angeordneter Ventilkörper 26 mit einer Strömungsblende 28 angeordnet ist. Der platten- oder scheibenförmige Ventilkörper 26 mit der mittig darin angeordneten Strömungsblende 28 ist im gezeigten Ausführungsbeispiel als flache Ventilplatte 30 bzw. als Ventilplättchen ausgebildet, das sowohl an der Oberseite der Unterdruckkammer 24 als auch an deren Unterseite, die durch die Saugplatte 14 begrenzt ist, dichtend aufliegen kann. Die Ventilplatte 30 ist somit zwischen zwei Endlagen weitgehend frei innerhalb der Unterdruckkammer 24 beweglich, so dass sie die Öffnung des Luftkanals 22 je nach Bedarf freigeben oder verschließen kann, um damit die Greifvorrichtung 8 sensibel ansprechen zu lassen, sobald die Kontaktfläche der Saugplatte 14 auf eine Oberseite des Objekts 16 aufgesetzt wird, um dieses mit ausreichender Haltekraft aufnehmen zu können.

Wenn auch die Strömungsblende 28 im gezeigten Ausführungsbeispiel der Figuren 1a bis 1c als mittige Bohrung in der Ventilplatte 30 dargestellt ist, so stellt dies keine Einschränkung hinsichtlich der möglichen Variantenvielfalt dar. Grundsätzlich kann die Strömungsblende 28 jede denkbare Form, Größe und Anordnung in der Ventilplatte 30 bzw. im beweglichen Ventilkörper 26 aufweisen. Die Gestaltung der Strömungsblende 28 kann sich nach den Erfordernissen des jeweiligen Ventils 10 und dessen Auslegung richten.

Der Luftkanal 22 sowie weitere, hier nicht dargestellte, Luftkanäle mehrerer solcher Ventile 10 ist/sind mit einer Unterdruckquelle verbunden. Die Greifvorrichtung 8 kann wahlweise durch Anordnung mehrerer Ansaugöffnungen 20 oder Ventile 10 als Flächengreifer, als sog. Saugerspinne oder als Saugerleiste o. dgl. ausgebildet sein. Im Bereich der Ansaugöffnungen 20 oder um diese herum können wahlweise elastische Elemente zur besseren Abdichtung der auf den Objekten 16 aufliegenden Kontaktfläche der Saugplatte 14 und deren Ansaugöffnungen 20 vorgesehen sein. Diese optionalen, hier nicht gezeigten, elastischen Elemente können in Zusammenwirkung mit den Ansaugöffnungen 20 als Saugglocken fungieren bzw. ausgebildet sein.

Der Ventilkörper 26 bzw. die Ventilplatte 30 liegt in einer ersten Endlage (vgl. Fig. 1a) an der oberen Öffnung des in die Unterdruckkammer 24 mündenden Luftkanals 22 an und verschließt diesen bis auf die durch die durchlässige Strömungsblende 28 vorgegebene Luftansaugung. In seiner ersten Endlage ist der Ventilkörper 26 durch den im Luftkanal 22 herrschenden Unterdruck an die obere Öffnung des Luftkanals 22 angesaugt. In seiner zweiten Endlage (vgl. Fig. 1 c) liegt der Ventilkörper 26 an einer Innenseite der Kontaktfläche der Saugplatte 14 mit den darin befindlichen Ansaugöffnungen 20 unter weitgehender Freihaltung des Öffnungsquerschnitts der beiden Ansaugöffnungen 20 auf.

Die Darstellungen der Fig. 1 verdeutlichen den Prozess der Kontaktierung und Aufnahme eines Objekts 16 mittels der erfindungsgemäßen Greifvorrichtung 8. Gemäß Fig. 1 a liegt der Ventilkörper 26 bzw. die Ventilplatte 30 solange an seiner ersten, oberen Endlage an der oberen Öffnung des in die Unterdruckkammer 24 mündenden Luftkanals 22 an und verschließt diesen bis auf den Querschnitt der durchlässigen Strömungsblende 28 weitgehend, bis die Kontaktfläche der Saugplatte 14 von oben auf das zu greifende Objekt 16 aufgesetzt wird (vgl. Fig. 1 b), wodurch das Luftvolumen innerhalb der Unterdruckkammer 24 über die Strömungsblende 28 weitgehend evakuiert wird und der Ventilkörper 26 bzw. die Ventilplatte 30 nach unten in die zweite Endlage auf die Innenseite der Saugplatte 14 fällt. Dadurch wird der Unterdruck zum Halten und Tragen des Objektes 16 über den größeren Querschnitt des Luftkanals 22 gehalten (vgl. Fig. 1c). Zur Funktionsweise und zum grundsätzlichen Aufbau des Ventils sei im Übrigen auf die EP 2 361 860 A2 verwiesen.

Die schematischen Ansichten der Fig. 2 verdeutlichen eine Ausführungsvariante eines lösbar in der Saugplatte 14 montierbaren Unterdruckventils 10, dessen Ventilgehäuse 12 eine zum Objekt (vgl. Fig. 1) weisende und weitgehend bündig mit der Unterseite 32 der Saugplatte 14 abschließende stirnseitige Kontaktfläche 34 aufweist. Zur definierten Montierbarkeit des Ventilgehäuses 12 in einer korrespondierenden Aufnahmeöffnung 36 der Saugplatte 14 weist das Ventil 10 bzw. dessen zylindrisch geformtes Ventilgehäuse 12 einen Absatz 38 auf, der einen etwas größeren Durchmesser als die mit dem Durchmesser der Aufnahmeöffnung 36 korrespondierende Mantelfläche 40 des Ventilgehäuses 12 aufweist. Die Seitenansicht der Fig. 2a und die perspektivische Rückansicht der Fig. 2c verdeutlichen den montierten Zustand des Ventilgehäuses 12, dessen zylindrische Mantelfläche 40 insgesamt drei Rasthaken 42 umfasst, deren nach außen weisende Rastnasen 44 im montierten Zustand an der Rückseite 46 der Saugplatte 14 einhaken bzw. einrasten. Während der Montage durch Einschieben des Ventilgehäuses 12 in die Aufnahmeöffnung 36 (vgl. Fig. 2b) werden die Rasthaken 42 leicht nach innen gebogen, da die Rastnasen 44 die Öffnung 36 passieren müssen. Normalerweise befinden sich mehrere solcher Ventile 10 in Aufnahmeöffnungen 36 der Saugplatte 14. Die in Fig. 2c gezeigte Perspektivansicht des montierten Ventils 10 lässt zudem einen bereits montierten Deckel 60 erkennen, der rückseitig im Ventilgehäuse 12 eingesetzt ist.

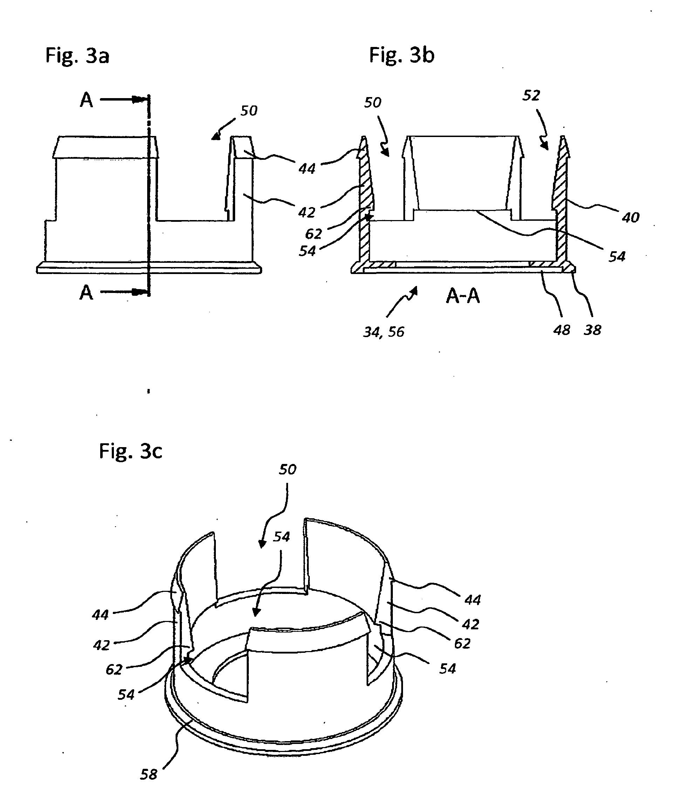

Die schematischen Ansichten der Fig. 3 zeigen in mehreren Detailansichten einen beispielhaften Aufbau des Ventilgehäuses 12, dessen ringförmiger Absatz 38 an der Unterseite mit ihrer stirnseitigen Kontaktfläche 34 mit einem versenkten Absatz 48 zum Einsetzen eines hier nicht dargestellten Filters versehen ist. Die verschiedenen Ansichten der Fig. 3a (schematische Seitenansicht), der Fig. 3b (Schnittansicht A-A aus Fig. 3a) und der Fig. 3c (Perspektivdarstellung) verdeutlichen nochmals die Komponenten des Ventilgehäuses 12. Die drei Ansichten lassen den ringförmigen Absatz 38 sowie die drei Rasthaken 42 mit ihren nach außen weisenden Rastnasen 44 erkennen. Die drei Rasthaken 42 sind jeweils durch Einschnitte 50 getrennt, die Aussparungen der Mantelfläche 40 des Ventilgehäuses 12 bilden, wie insbesondere die Fig. 3c deutlich erkennen lässt. Die durch die Einschnitte 50 voneinander getrennten Teilabschnitte der Mantelfläche 40 des Ventilgehäuses 12 weisen eine leichte Elastizität auf, so dass die als Rasthaken 42 bezeichneten Abschnitte für die Montage des Ventilgehäuses 12 (vgl. Fig. 2b) leicht nach innen gedrückt werden können, wobei die nach außen weisenden Rastnasen 44 an den Oberkanten der Rasthaken 42 als Widerhaken fungieren und entsprechend Fig. 2a an der Rückseite 46 der Saugplatte 14 einrasten.

Durch eine Fertigung des Ventilgehäuses 12 aus einem geeigneten Kunststoff verfügen die Rasthaken 42 über die für die leichte Montierbarkeit in der Saugplatte 14 erforderliche Elastizität. Das Ventilgehäuse 12 kann jedoch auch aus einem geeigneten Metall wie bspw. einer Aluminiumlegierung oder aus einem geeigneten Druckgussmaterial gebildet sein, wodurch ebenfalls die notwendige Steifigkeit und Elastizität der Rasthaken 42 sichergesellt werden kann, sofern die Materialstärke entsprechend gewählt ist.

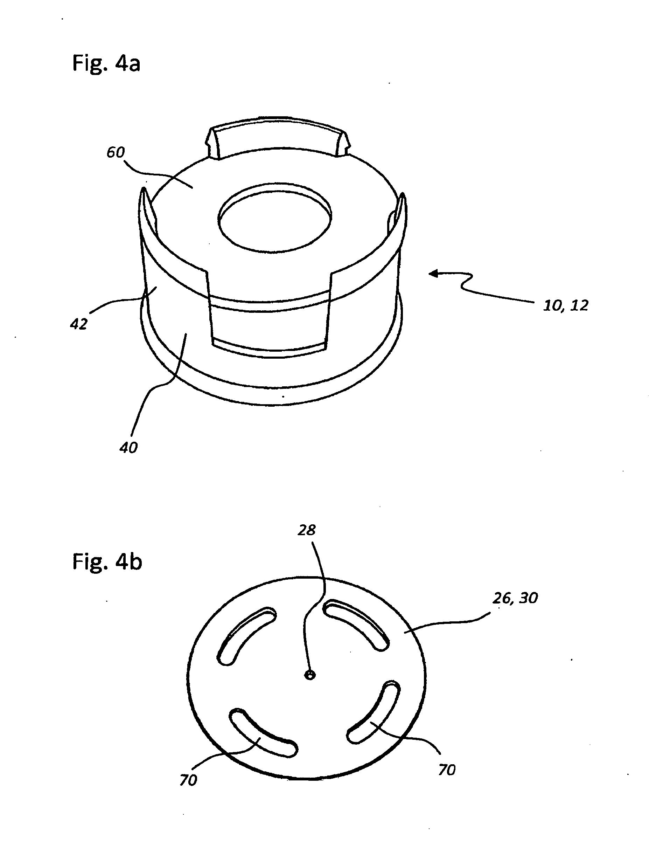

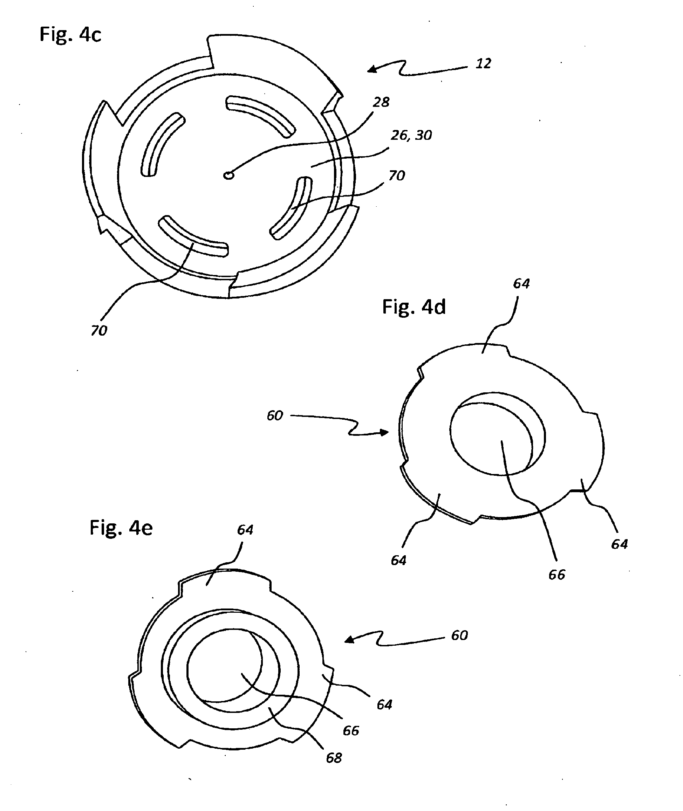

Die in der Fig. 3b besonders deutlich werdende konisch zulaufende Innenmantelfläche 52 des Ventilgehäuses 12 ermöglicht das Einlegen des Ventilplättchens 30 (vgl. Fig. 1) und dessen anschließende Festlegung durch einen in der Innenmantelfläche 52 verrastbaren Deckel 60, der im eingesetzten Zustand andeutungsweise in der Fig. 2c erkennbar ist. Der in den Darstellungen der Fig. 4 im Detail erkennbare Deckel (vgl. Fig. 4b, Fig. 4c) weist eine mit der Innenmantelfläche 52 des Ventilgehäuses 12 sowie mit den Aussparungen 50 zwischen den Rasthaken 42 korrespondierende Kontur auf, so dass er unter leichter elastischer Verformung der Rasthaken 42 nach außen in seinen Sitz gedrückt werden und anschließend unterhalb der zur Innenmantelfläche 52 weisenden weiteren Rastnasen 62 (vgl. Fig. 3c) verrasten kann. Diese weiteren Rastnasen 62 befinden sich unterhalb der nach außen weisenden Rastnasen 44, so dass sich die Rasthaken 42 auch bei eingesetztem Deckel 60 leicht nach innen drücken lassen, wenn das Ventil 10 im komplettierten Zustand in die Aufnahmeöffnung 36 der Saugplatte 14 eingesetzt werden soll (vgl. Fig. 2).

Der Bohrungsdurchmesser der Innenmantelfläche 52 ist größer als der Außendurchmesser des Ventilplättchens 30, so dass sich dieses leicht im Ventilgehäuse 12 bewegen kann. Dagegen ist der Außendurchmesser des Deckels 60 vorzugsweise etwas größer als der Bohrungsdurchmesser der Innenmantelfläche 52, so dass der Deckel 60 dort unter Spannung gehalten werden kann und am Herausfallen gehindert ist. Eine unterhalb der Rasthaken 42 bzw. der Einschnitte 50 erkennbare Hinterdrehung 54 (vgl. Fig. 3c) bildet die weiteren Rastnasen 62 an den Rasthaken 42 bzw. im unteren Bereich der Innenmantelfläche 52 und ermöglicht es, das Ventilplättchen 30 in der Hülse des Ventilgehäuses 12 zu halten, indem der Deckel 60 nach dem Einsetzen in das Ventilgehäuse 12 unterhalb der Hinterdrehung 54 verrastet wird. Wie oben erwähnt, dient der frontseitige Absatz 48 der Aufnahme eines hier nicht dargestellten Filterelements, das dort eingelegt werden kann. Die frontseitige Saugbohrung 56 bildet die Ansaugöffnung 20 entsprechend Fig. 1. Eine optionale Fase 58 an der Rückseite des frontseitigen Absatzes 38 kann die Demontage des Ventilgehäuses 12 von der Saugplatte 14 erleichtern, da die Fase 58 bzw. das Aushebeln mit einem Schlitzschraubendreher ermöglichen oder erleichtern kann.

Die insgesamt fünf verschiedenen Ansichten der Fig. 4 zeigen die miteinander verbindbaren Einzelkomponenten des Unterdruckventils 10, das im Wesentlichen aus dem Ventilgehäuse 12 (Fig. 4a), dem Ventilkörper 26 in Gestalt der im Gehäuse 12 vertikal beweglichen Ventilplatte 30 (Fig. 4b) und dem mit dem Ventilgehäuse 12 verrastbaren Deckel 60 (Fig. 4d, Fig. 4e) gebildet ist.

Die Fig. 4a zeigt eine perspektivische Ansicht des komplettierten und teilweise zusammengebauten Ventils 10, das durch das zylindrische Ventilgehäuse 12, die in der Innenmantelfläche 52 (vgl. Fig. 3c) aufgenommene Ventilplatte 30 (Fig. 4b) sowie durch den rückseitig mit den weiteren Rastnasen 62 der Rasthaken 42 verrastbaren Deckel 60 (Fig. 4d, Fig. 4e) gebildet ist. Die Figuren 4a und Fig. 3c lassen dabei die durch insgesamt drei Einschnitte 50 unterbrochene Mantelfläche 52 des Ventilgehäuses 12 erkennen, so dass insgesamt drei Rasthaken 42 zur Aufnahme der Ventilplatte 30, zur Fixierung des Deckels 60 und zur Verrastung des gesamten Ventils 10 in der Saugplatte 14 zur Verfügung stehen. Um das Ventil 10 in der Saugplatte 14 lösbar verrasten zu können, weisen die durch die drei Einschnitte 50 unterbrochenen drei Rasthaken 42 jeweils nach außen weisende Rastnasen 44 zur Verrastung in der Aufnahmeöffnung 36 der Saugplatte 14 auf (vgl. Fig. 4a, Fig. 3c).

Wie bereits anhand der Figuren 3b und 3c erläutert wurde, weisen die Rasthaken 42, welche den Mantel 40 des Ventilgehäuses 12 bilden, in der Innenmantelfläche 52 jeweils weitere Rastnasen 62 auf, die zur Innenmantelfläche 52 weisen, tiefer als die äußeren Rastnasen 44 angeordnet sind und den Deckel 60 im verrasteten Zustand unterhalb der Hinterdrehung 54 fixieren. Wie die Figuren 4d und 4e verdeutlichen, weist der Deckel 60 eine mit der Kontur des Ventilgehäuses 12 korrespondierende Kontur mit insgesamt drei kurzen Flügeln 64 auf, die einen größeren Außendurchmesser aufweisen als der Durchmesser der Innenmantelfläche 52 des Ventilgehäuses 12, so dass sie jeweils in die Einschnitte 50 passen und dort aufgenommen werden, während der übrige Bereich des Deckels 60 mit der Innenmantelfläche 52 korrespondiert und weitgehend spielfrei in der Hinterdrehung 54 aufgenommen werden kann, wenn der Deckel 60 ganz nach unten gedrückt wird. Die Flügel 64 liegen in dieser Lage jeweils auf dem zylindrischen unteren Abschnitt des Gehäusemantels 40 auf, der sich unterhalb der Hinterdrehung 54 und unterhalb der Einschnitte 50 befindet (vgl. Fig. 3b, Fig. 3c), so dass ein unterer Anschlag für den eingesetzten Deckel 60 gebildet ist.

Der plattenförmige Deckel 60 weist weiterhin eine mittige Bohrung 66 auf, die an der zum Ventilkörper 26 weisenden Unterseite von einem Dichtring 68 umgeben ist, so dass der Ventilkörper 26 dort dichtend anliegen kann, wenn kein Körper an der Unterseite des Ventils 10 angesaugt wird. In dieser Lage wird der Ventilkörper 26 bzw. die Ventilplatte 30 nach oben gegen den Dichtring 68 des Deckels 60 gesaugt, so dass von den Luftöffnungen der Ventilplatte 30 nur noch die kleine mittige Strömungsblende 28 frei bleibt und Luft passieren lässt (vgl. Fig. 4c). Dieser Ventilzustand entspricht dem in der Fig. 1a gezeigten Zustand ohne direkt an der Saugplatte 14 anliegendem Objekt 16, so dass die unteren Ansaugöffnungen 20 zwar frei sind, jedoch nur eine geringe Menge an Saugluft durch die Strömungsblende 28 des Ventilkörpers 26 passieren kann. Weitere kreissegmentförmige Luftöffnungen 70 werden in dieser Lage entsprechend Fig. 1a bei am Dichtring 68 des Deckels 60 anliegendem Ventilkörper 26 durch den Dichtring 68 verschlossen, so dass nur wenig Saugluft durch die mittige Strömungsblende 28 im Ventilkörper 26 bzw. der Ventilplatte 30 strömen kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 8: Unterdruck-Greifvorrichtung
- 10: Unterdruckventil
- 12: Ventilgehäuse
- 14: Saugplatte
- 16: Objekt, Artikel
- 20: Ansaugöffnung
- 22: Luftkanal
- 24: Unterdruckkammer
- 26: Ventilkörper
- 28: Strömungsblende
- 30: Ventilplatte
- 32: Unterseite
- 34: Kontaktfläche
- 36: Aufnahmeöffnung
- 38: Absatz
- 40: Mantelfläche
- 42: Rasthaken
- 44: Rastnase
- 46: Rückseite
- 48: Absatz
- 50: Einschnitt
- 52: Innenmantelfläche
- 54: Hinterdrehung
- 56: Saugbohrung
- 58: Fase
- 60: Deckel
- 62: weitere Rastnasen
- 64: Flügel
- 66: Bohrung
- 68: Dichtring
- 70: Luftöffnung

## Patentansprüche

1. Unterdruck- Greifvorrichtung (8) umfassend eine ebene Kontaktfläche einer Saugplatte (14) zur Aufnahme von Objekten (16), mit mindestens einem Ventil (10), wobei die Saugplatte (14) jeweils wenigstens eine Ansaugöffnung (20) aufweist, die mit einem Luftkanal (22) und einem zugeordneten Ventil (10) in Verbindung steht, wobei das Ventil (10) ein hülsenförmiges Ventilgehäuse (12) mit integrierter Unterdruckkammer (24) zur Aufnahme eines Ventilkörpers (26) umfasst, wobei der Ventilkörper (26) innerhalb der im Luftkanal (22) befindlichen Unterdruckkammer (24) des Ventils (10) beweglich angeordnet ist und wobei der Ventilkörper (26) eine Strömungsblende (28) aufweist, **dadurch gekennzeichnet, dass** die wenigstens eine Ansaugöffnung (20) als Aufnahmeöffnung (36) ausgebildet ist und dass das hülsenförmige Ventilgehäuse (12) mittels einer lösbaren Rastverbindung in der Aufnahmeöffnung (36) fixierbar ist.

2. Unterdruck- Greifvorrichtung (8) nach Anspruch 1, bei der das Ventilgehäuse (12) eine Aufnahme für den im Ventilgehäuse (12) beweglich angeordneten plattenförmigen Ventilkörper (26) aufweist.

3. Unterdruck- Greifvorrichtung (8) nach Anspruch 2, bei der das Ventilgehäuse (12) einen in der Aufnahme fixierbaren, insbesondere verrastbaren, und gegen eine Haltekraft lösbaren oberen Deckel (60) aufweist, wobei zwischen dem Deckel (60) und der unteren Saugplatte (14) der Ventilkörper (26) beweglich angeordnet ist.

4. Unterdruck- Greifvorrichtung (8) nach Anspruch 2 oder 3, bei der das Ventilgehäuse (12) eine konisch zulaufende Innenmantelfläche (52) zur Fixierung des lösbaren und/oder verrastbaren Deckels (60) aufweist.

5. Unterdruck- Greifvorrichtung (8) nach einem der Ansprüche 1 bis 4, deren durch mehrere Einschnitte (50) unterbrochene zylindrische Mantelfläche (40) wenigstens zwei Rasthaken (42) bildet, die nach außen weisende Rastnasen (44) zur Verrastung in der Saugplatte (14) aufweisen.

6. Unterdruck- Greifvorrichtung (8) nach Anspruch 5, bei der die Rasthaken (42) der Mantelfläche (40) des Ventilgehäuses (12) jeweils weitere Rastnasen (62) aufweisen, die zur Innenmantelfläche (52) weisen und den Deckel (60) im verrasteten Zustand fixieren.

7. Unterdruck- Greifvorrichtung (8) nach einem der Ansprüche 1 bis 6, bei der das Ventilgehäuse (12) einen Absatz (38, 48) zur Fixierung eines Filters an seiner Stirnfläche aufweist.

## Claims

1. A vacuum gripping device (8), comprising one even contact surface of a suction plate (14) for picking up objects (16), the vacuum gripping device (8) having at least one valve (10), wherein the suction plate (14) in each case has at least one suction opening (20), which is in connection with an air duct (22) and an assigned valve (10), wherein the valve (10) comprises a sleeve-shaped valve housing (12) with an integrated vacuum chamber (24) for accommodating a valve body (26), wherein the valve body (26) is movably arranged within the vacuum chamber (24) of the valve (10), which vacuum chamber (24) is located in the air duct (22), and wherein the valve body (26) has a flow stop plate (28), **characterised in that** the at least one suction opening (20) is designed as reception opening (36) and **in that** the sleeve-shaped valve housing (12) is fastenable in the reception opening (36) by means of a detachable snap lock connection.

2. The vacuum gripping device (8) as recited in claim 1, in which the valve housing (12) has a reception for the plate-shaped valve body (26) that is arranged movably in the valve housing (12).

3. The vacuum gripping device (8) as recited in claim 2, in which the valve housing (12) has a top cover (60), which is fastenable, in particular snap-lockable in the reception and detachable against a holding force, wherein the valve body (26) is movably arranged between the cover (60) and the bottom suction plate (14).

4. The vacuum gripping device (8) as recited in claim 2 or 3, in which the valve housing (12) has a conically tapering inner lateral surface (52) for fastening the detachable and/or snap-lockable cover (60).

5. The vacuum gripping device (8) as recited in one of the claims 1 to 4, the cylindrical lateral surface (40) of which is interrupted by a plurality of incisions (50) and forms at least two snap hooks (42), which have outwardly facing snap noses (44) for snap-locking into the suction plate (14).

6. The vacuum gripping device (8) as recited in claim 5, in which the snap hooks (42) of the lateral surface (40) of the valve housing (12) each comprise further snap noses (62), which face toward the inner lateral surface (52) and fasten the cover (60) in the snap-locked state.

7. The vacuum gripping device (8) as recited in one of the claims 1 to 6, in which the valve housing (12) has a shoulder (38, 48) for fastening a filter at its face surface.

## Revendications

1. Dispositif de préhension à dépression (8) comprenant une surface de contact plane d'une plaque d'aspiration (14) pour recevoir des objets (16), avec au moins une soupape (10), ladite plaque d'aspiration (14) présentant respectivement au moins un orifice d'aspiration (20) qui est en communication avec un conduit d'air (22) et une soupape (10) associée, ladite soupape (10) comprenant un boîtier de soupape (12) en forme de manchon ayant une chambre de dépression (24) intégrée pour recevoir un corps de soupape (26), ledit corps de soupape (26) étant disposé de manière mobile à l'intérieur de la chambre de dépression (24) de la soupape (10), située dans ledit conduit d'air (22), et le corps de soupape (26) présentant un obturateur d'écoulement (28), **caractérisé par le fait que** ledit au moins un orifice d'aspiration (20) est réalisé comme ouverture de réception (36) et que le boîtier de soupape (12) en forme de manchon peut être fixé dans ladite ouverture de réception (36) au moyen d'une liaison à encliquetage amovible.

2. Dispositif de préhension à dépression (8) selon la revendication 1, dans lequel le boîtier de soupape (12) présente un logement pour le corps de soupape (26) en forme de plaque disposé de manière mobile dans le boîtier de soupape (12).

3. Dispositif de préhension à dépression (8) selon la revendication 2, dans lequel le boîtier de soupape (12) présente un couvercle (60) supérieur apte à être fixé, en particulier encliqueté, dans le logement et détachable contre une force de maintien, le corps de soupape (26) étant disposé de manière mobile entre le couvercle (60) et la plaque d'aspiration (14) inférieure.

4. Dispositif de préhension à dépression (8) selon la revendication 2 ou 3, dans lequel le boîtier de soupape (12) présente une surface latérale intérieure (52) s'effilant en cône et destinée à fixer ledit couvercle (60) amovible et/ou apte à être encliqueté.

5. Dispositif de préhension à dépression (8) selon l'une quelconque des revendications 1 à 4, dont la surface latérale (40) cylindrique interrompue par une pluralité d'encoches (50) forme au moins deux crochets d'arrêt (42) qui présentent des nez d'arrêt (44) montrant vers l'extérieur pour l'encliquetage dans la plaque d'aspiration (14).

6. Dispositif de préhension à dépression (8) selon la revendication 5, dans lequel lesdits crochets d'arrêt (42) de la surface latérale (40) du boîtier de soupape (12) présentent chacun d'autres nez d'arrêt (62) qui montrent vers la surface latérale intérieure (52) et fixent le couvercle (60) en état encliqueté.

7. Dispositif de préhension à dépression (8) selon l'une quelconque des revendications 1 à 6, dans lequel le boîtier de soupape (12) présente un épaulement (38, 48) pour la fixation d'un filtre sur sa surface frontale.
